# EUROPEAN PATENT APPLICATION

(11) **EP 2 204 730 A1**
(43) Date of publication of application: **07.07.2010**
(21) Application number: 09305007.8
(22) Date of filing: 06.01.2009
(51) Int. Cl.: G06F 3/06

(54) **Method and apparatus for creating files in a file system**

(71) Applicant: Thomson Licensing, 92443 Issy-les-Moulineaux Cedex (FR)
(72) Inventor: Zhang, Xiao Long, Lu, Haidian District BEIJING 100085 (CN); Qu, Dong Sheng, BEIJING 100097 (CN)
(74) Representative: Ruellan-Lemonnier, Brigitte

(57) **Abstract**

This invention proposes a method and apparatus for creating files in a file system. In the file system, there is a file header pool which can be established when mounting the file system. When a new file is to created, a file header is applied from the file header pool, and what needed to do is changing the information contained in the applied file header according to the real information of the current file.

## Description

### TECHNICAL FIELD

This invention relates to the field of file storage devices, for example Personal Video Recorders (PVRs). More particularly, this invention relates to a method and a device for creating files in a file system.

### BACKGROUND OF THE INVENTION

Currently PVR products use hard disks as storage media. With the price of hard disks decreasing dramatically, disks with larger capacities are used in PVR products. When a PVR recorder creates a record, it needs to create a number of files on the disk before a user can write stream data to it. This file creation process may take more than 1 second. In the worst case, 4 or 5 seconds may be required.

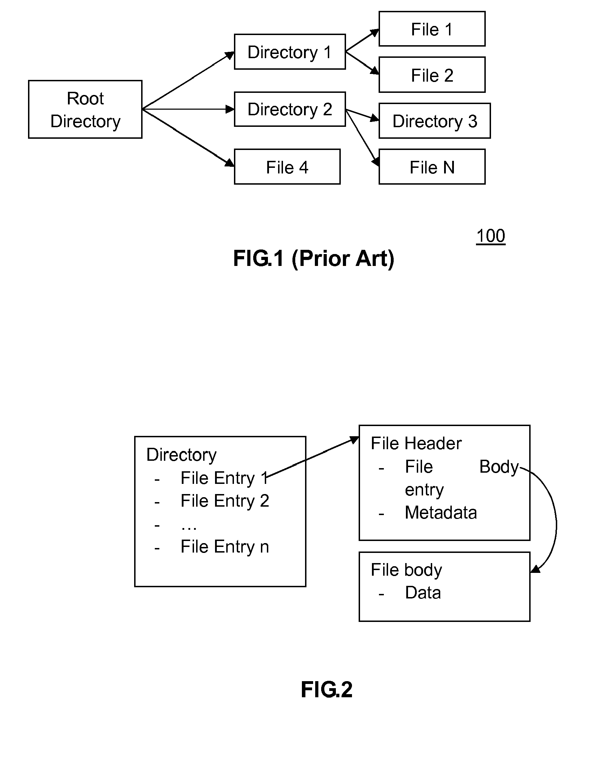

Fig.1 is a diagram illustrating how a file is managed in a prior art file system. A file system is a hierarchy of directories (also referred to as a directory tree) that is used to organize files and data on a PVR, a computer, or storage media to make it easy to find and access them. Seen as shown in Fig.1, in the file system, there is a root directory, under which there is a file 4 and two directories, directory 1 and directory 2. Under the directory 1 there are file 1 and file 2, while under the directory 2, there is a file N and a sub-directory 3.

When the file system creates a file, it needs to firstly allocate some space for the file header and then to write information into the file header for this file on the disk. Most of the time consumed for the file creation process is used to allocate space for the file header. The time consumed for the space allocation of the file header depends on the partition size of the storage media, the partition fragmentation status, etc. For example, if the partition size is large and there are many fragments in the storage media, this process may cost several hundred milliseconds. Unfortunately, fragmentation on the disk is hard to avoid after the PVR has been running for a certain time.

This may have a negative influence on the PVR product user. When a user watches live TV and finds something interesting, he presses "REC" key to start recording. Given the above situation, he may need to wait for several seconds before the data is really recorded, which causes some seconds of data being lost. Further, the starting time of the recording is not predictable. Some investigations to improve the efficiency of starting a recording have been done. One of the solutions is to use a stream buffer to keep the data while the record files are being created. Since the stream buffer needs to be large, the buffer would be on the disk rather than implemented in RAM, which increases disk usage and thus power requirements..

### SUMMARY OF THE INVENTION

In a first aspect, the invention concerns a device comprising a file system. The device includes: a storage module for storing a plurality of pre-created file headers, wherein said file headers are created prior to a request to create a file, each file header comprising pre-allocated descriptors for files to be stored in the file system, and a processor for updating the pre-allocated descriptors of a given file header when a file is stored or is to be stored in the storage module.

The device further comprises a plurality of pointers, wherein each pointer points to a location of a pre-created available file header.

In addition, the plurality of file headers in the device comprises file headers of deleted files made available for future files.

Further, there is a maximum and a minimum number of pre-created file headers available in the device.

In addition, the file header of a deleted file is made available again only when the number of the file headers is between the maximum and the minimum number.

In a second aspect, a method for creating a file in a file system is provided. The method comprises steps of: storing a plurality of pre-created file headers, wherein said file headers are created prior to a request to create a file, each file header comprising pre-allocated descriptors, and updating the pre-allocated descriptors of a given file header when said given file header is associated with a file.

### BRIEF DESCRIPTION OF THE DRAWINGS

FIG.1 (prior art) is a diagram illustrating an example of a folder and file structure in a file system,
FIG.2 is a diagram showing the structure of a file which includes a file header and a file body,
FIG.3 is a diagram showing the file system with a file header pool according to an embodiment,
FIG.4 is a diagram showing the location of the file header pool according to an embodiment,
FIG.5 is a table illustrating information contained in an exemplary file header,
FIG.6 is a table showing information contained in the exemplary file header used when a file is to be recorded,
FIG.7 is an overall diagram showing the exemplary file header when the file is recorded, and
FIG.8 is a flow chart showing the process at the processor according to the embodiment.

### DETAILED DESCRIPTION OF THE EMBODIMENTS

FIG.2 is a diagram showing the structure of an illustrative file which includes a file header and a file body in the file system. The file body is presented differently in different file systems. Basically, the file body contains the data of the file and represents most of the file size. The file header typically only uses very little space. However, it is very important, since it contains the entry pointer to the file body, File Body Entry. The data in the file body cannot be read without the information in the file header.

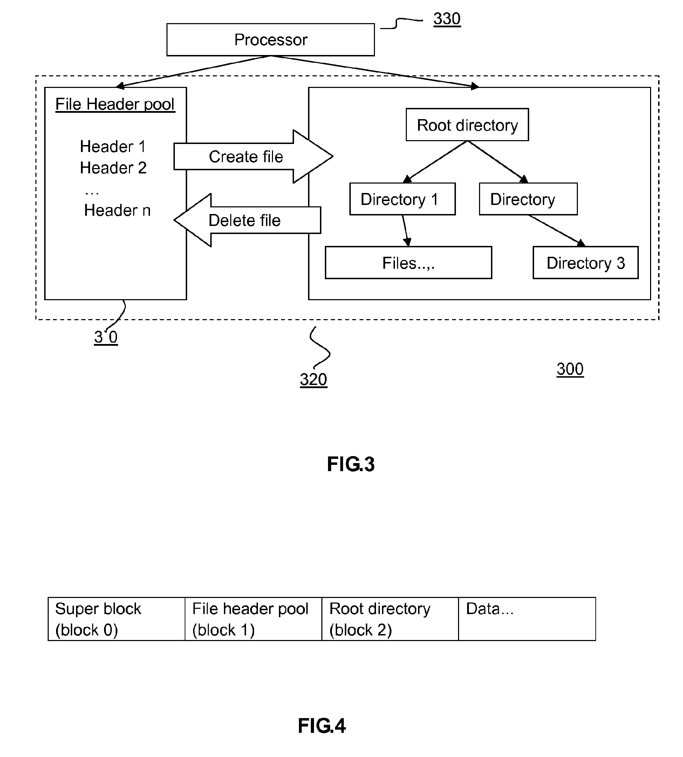

FIG.3 is a diagram showing an electronic device 300 includes a file system with a file header pool 310 according to an embodiment. The electronic device is a PVR for example. In the embodiment, the file header pool is created on the storage device 320 for a file system by the processor 330. The storage device can be hard disk. This file header pool 310 contains a number of file headers and is created when the file system is mounted for the first time, e.g. the file system is attached to a currently accessible file system of a PVR for the first time. A mounting operation can also be considered as reading the data in a disk, construct a file system structure in memory, etc...In the embodiment, the file header pool 310 is allocated by the processor 330 to a zone on the storage device with fixed address in the disk partition. This fixed address is defined when the file system is created. As an example shown in Fig.4, the file header pool 310 is located at a block following the "super block". The "super block" is in the first block or blocks on the storage device and contains information about the file system. When a file is to be created under a directory, e.g. directory 1, a file header will be applied from the pool for use.

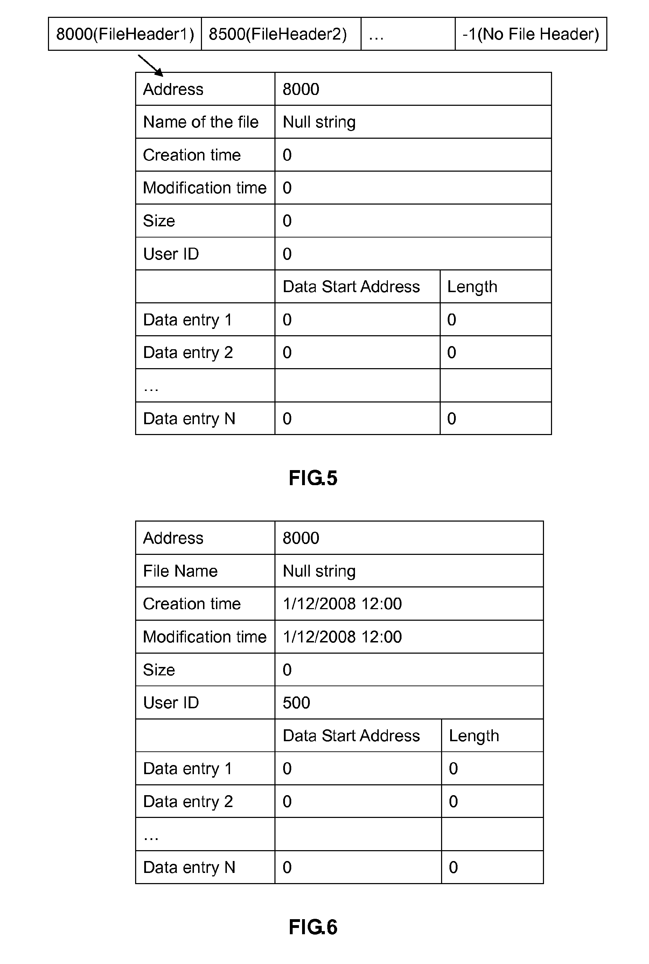

Fig.5 is a table illustrating information contained in an exemplary file header when the file system is mounted for the first time. In the file header pool, there are indexes to the file headers themselves. These indexes are address of the file headers, i.e. pointers. For example, file header 1 has an index of 8000, which points to block 8000 on the storage medium, where the file header 1 is located. In the file header 1, some metadata has been pre-assigned by the processor 330 and these metadata fields are initialized with initial values by the processor 330. "Address" shows where the file header is physically located on the storage device. The storage device is divided into a number of blocks with identical size, e.g. 1024 bytes. In the example, the allocated address for the file header is a block numbered 8000. "Name of the file" indicates the name of the file that the file header is associated with. In Fig.4, the name of the file is assigned a value of "Null", as there is no file related to this file header yet. The field "creation time" shows when the file associated with the file header is created. "Modification time" shows when the file associated with the file header is amended last time. "Size" indicates the size of the file associated with the file header. "User ID" means who created the file. Since there is no corresponding file, the "Modification time", "size", and "User ID" have initially the value "0". For data information contained in the file, normally "data start address" and "length" will be registered. "Data start address" specifies from which block the data is written, and "length" shows how many blocks the data occupies. Since there is not a specified file associated with the file header, "data start address" and "length" for data entries 1, 2... N are set to "0" too.

Fig.6 is a table showing information contained in an exemplary file header when it is used by a file. When a file is created, for example, when a user begins to record a PVR video file, the processor 330 will search in the file header pool 310 to find out an unused file header and assign this found file header to the file to be created. After the file header associates with a specific file, the initially set values are reassigned or updated by the processor 330. For example, in Fig.6, the file has no name when the record process begins, and the file create time is 1/12/2008, 12:00pm, the modified time is 1/12/2008, 12:00pm too, since this is the first time that the file is edited (recorded), and the User ID is 500, which shows the user with ID 500 created the file. There is no data in the file at this time. After the data is written into the file on the storage media, the data entries 1, 2...N fields will be updated, which means the data start address, length will be written into the table. When a file header from the file header pool is used by a file, its corresponding address will be removed from the file header pool. For example, when the file header 1 is used, address 8000 will be removed.

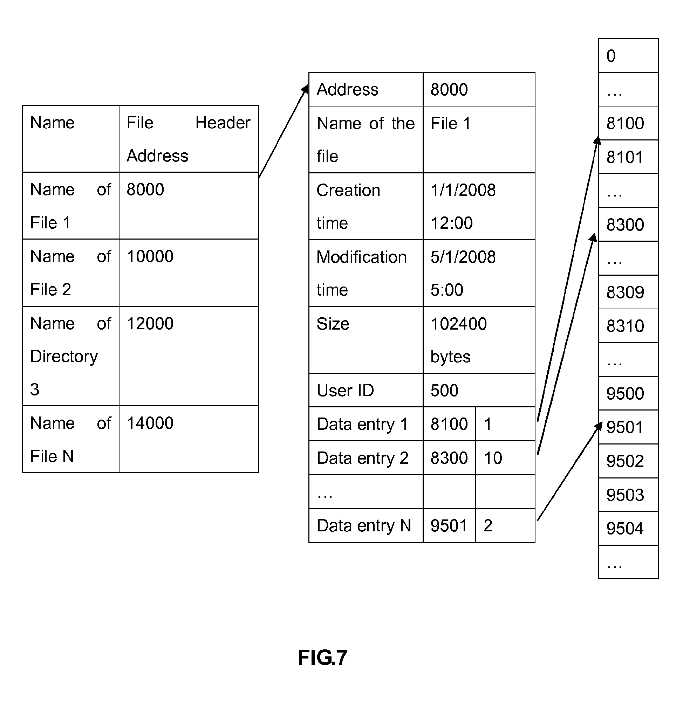

Fig.7 is an overall diagram showing how a file header is finally organized in the file system. After the file has been recorded, some information lacking in Fig.6 is written. The file name now is "File 1 ", and the recorded file size is 102400 bytes. For the first piece of data, the physical address is block 8100 and the length is 1 block. For the second piece of data, the physical address is block 8300 and the length is 10 blocks (from block 8300~ block 8309).

The number of pre-created file headers is decided in advance. When some of the file headers in the file header pool are used and the number of the file headers is less than the minimum threshold, new file headers are created until the number of the file headers is equal to the maximum threshold. Thus a number of file headers are maintained in the file header pool to ensure when creating a new file, there is a file header that can be used immediately from the file header pool.

Afterwards, when mounting a file system again, the file system will detect if there are enough file headers in the file header pool, i.e., whether the number of file headers in the file header pool is larger than the minimum threshold. If not, the file system will create some additional headers. In another example, there is an application with low priority to detect the file header pool status to guarantee there are a certain number of file headers in the pool. If there are not enough file headers in the file header pool, the application will create a certain number of file headers.

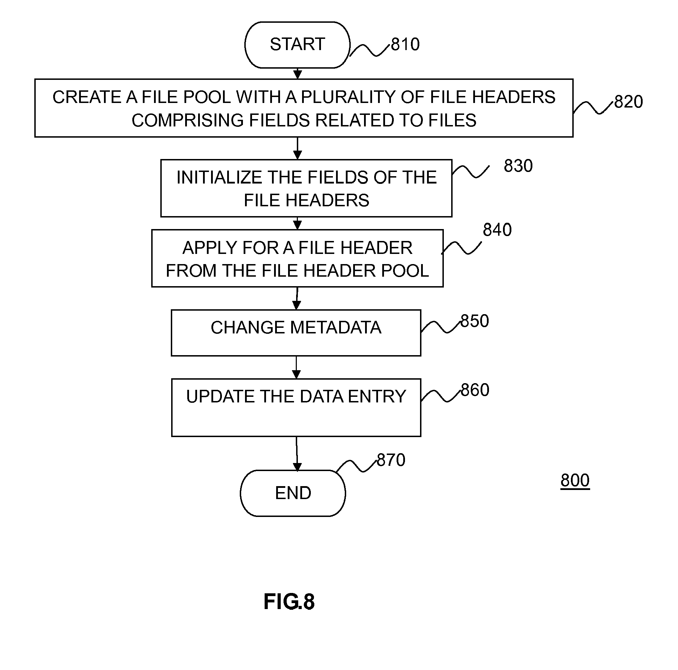

Fig.8 is a flow chart illustrating the process at the processor 330 according to the embodiment. The process 800 starts with step 810. When a file system is mounted for the first time, at step 820, the processor 330 creates a file header pool 310 with a plurality of file headers. A number of metadata fields are contained in a file header, including an "Address" field showing where the file header is physically located on the storage device, "Name of the file" indicating the name of the file that the file header associates, "Creation time" showing when the file associated with the file header was created, "Modification time" showing when the file associated with the file header was last amended, "Size" indicating the size of the file associated with the file header, "User ID" identifying the user having made the recording, "data start address" specifying from which block the file data is written, and "length" showing how many blocks the file data occupies. Each field is initialized by the processor 330 to an initial value at step 830. When the user wants to record a PVR program, e.g. a TV show, a movie, a sport game, etc., and has pressed the button "record", the processor 330 applies for a file header from the existing file header pool, as shown in step 840. Then the metadata in the file header is changed at step 850. For example, the" Creation time" field in the file header will be updated to the current time; the "Name of the file" field will be updated to the real name according to the requirements of the PVR program, etc. According to the present embodiment, a PVR record will comprise more than one file: for example a stream file, a metadata file, an index file, a statistics file and so on. These files will have different names. And then a new space is allocated for writing the file, and the "data entry" in the applied file header will point to the allocated space, i.e. the "data entry" in the selected file header is updated as shown in step 860. After that, the process ends at step 870.

As an option, when a file is deleted from the file system, its file header will be put back into the file header pool if the number of file headers in the pool is smaller than a threshold. When a file is deleted, the file body will be released first. That is the space on the storage of PVR and occupied by the file data is handed back to the file system and the space can be used by other files. Then the file header of the file will be inserted into the existing file header pool, which means that the file header's address will be registered in the file header pool Because there is a threshold to limit the maximum number of file headers, the file header of the deleted file will be inserted into the file header pool only if the file header pool isn't full. In this way, the file header will be reused in a future file recording without new space allocation for the file header.

According to the present embodiment, the file header includes the following fields: "Name of the file", "Creation time", "Modification time", "Size", "User ID". Other fields can be added, for example a field showing the access rights to the file, etc.

A number of implementations have been described. Nevertheless, it will be understood that various modifications may be made. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application and are within the scope of the following claims.

## Claims

1. A device (300) comprising a file system, **characterized in that** it further includes:
a storage module (320) for storing a plurality of pre-created file headers, wherein said file headers are created prior to a request to create a file, each file header comprising pre-allocated descriptors for files to be stored in the file system,
a processor (330) for updating the pre-allocated descriptors of a given file header when a file is stored or is to be stored in the storage module.

2. The device (300) according to claim 1, further comprising a plurality of pointers, wherein each pointer points to a location of a pre-created available file header.

3. The device (300) according to claim 1 or 2, wherein the plurality of file headers comprises file headers of deleted files made available for future files.

4. The device (300) according to claim 3, wherein there is a maximum and a minimum number of pre-created file headers available.

5. The device (300) according to claim 4, wherein the file header of a deleted file is made available again only when the number of the file headers is between the maximum and the minimum number.

6. A method for creating a file in a file system comprising steps of:
storing a plurality of pre-created file headers, wherein said file headers are created prior to a request to create a file, each file header comprising pre-allocated descriptors (820,830),
updating the pre-allocated descriptors of a given file header when said given file header is associated with a file(850,860).
